Europäisches Patentamt

(19) European Patent Office

Office européen des brevets

(11) Publication number: **0 160 498**
**A2**

(12) # EUROPEAN PATENT APPLICATION

(21) Application number: 85302837.1

(22) Date of filing: 23.04.85

(51) Int. Cl.⁴: **H 02 G 3/04**
**F 16 L 9/19**

(30) Priority: 23.04.84 US 603092
02.04.85 US 707414

(43) Date of publication of application:
06.11.85 Bulletin 85/45

(84) Designated Contracting States:
AT BE CH DE FR GB IT LI NL SE

(71) Applicant: Valenzano, Marcello
154-09 33rd Avenue
Flushing New York(US)

(71) Applicant: Hutcheon, Charles
33-02 Union Street
Flushing New York(US)

(72) Inventor: Valenzano, Marcello
154-09 33rd Avenue
Flushing New York(US)

(72) Inventor: Hutcheon, Charles
33-02 Union Street
Flushing New York(US)

(74) Representative: Baillie, Iain Cameron et al,
c/o Ladas & Parry Isartorplatz 5
D-8000 München 2(DE)

(54) Conduit cable support.

(57) The invention relates to conduits for carrying and protecting cables and particularly to carrier supports within said conduits which support cables or other utility carriers. The carrier supports serve to protect the cables from abrasive contact with the conduit and comprise elongated extruded malleable members whose outer surfaces conform to the inner wall of the conduit. A plurality of extruded cavities are provided within the extruded member which are symmetrically oriented about a line central to the member, each cavity having a common wall along contact points between cavities and the outer covering of the extruded member. Support barriers are provided between the cavities and the outer walls to maintain the cavity form.

Fig.1.

EP 0 160 498 A2

## CONDUIT CABLE SUPPORT

This invention relates to conduits for the purpose of carrying and protecting wire, fiber optics, and other media carrying cables and is particularly directed to carrier supports adapted to be within said conduits to support said cables.

Protective cable carrying conduits presently are for the purpose of supporting and protecting the cable from the external elements to prevent the cable from undue wear and tear and from an early demise. Further, when cables are snaked through the conduits they invariably engage and contact the harsh and rough surfaces of the conduit, thus at times making it difficult to pull the cables through the conduit. Also, the constant contact of cable and conduit presents abrasive problems and pressure problems which causes the cables to deteriorate. Along the conduit seals there is the further possibility of sheer stresses on the cable which may cause premature rupture of the cable thereby shortening the life of the cable.

These cables serve many functions in that they are communications, electrical, and gas carriers. Other carriers such as fiber optics cable are possible also. Hence, any interruptions of these services represents not only inconvenience, but they represent economic factors which are exceedingly detrimental to the user and the supplier. To overcome these detrimental factors

U.S. 603092 etc.

the applicant has devised a special extrudible carrier or support disposed to reside within any type conduit for the purpose of carrying utility cables without any detriment thereto or interruptions of the services carried by such cables.

## SUMMARY

It is the purpose of applicant's invention to provide cable carrying supports disposed to be extruded into elongated malleable forms capable of entering and fitting into the internal portions of the conduits so as to substantially take the form thereof, and at the same time capable of carrying the cables while supporting same in a manner so as to present no interference, intermingling or intertwining of the cables within the conduit along the paths thereof. Further, such cable carrying supports render the cables crushproof by virtue of the structural support of the extrusions in a manner to be further described by the specifications herein. Other objects and advantages will become apparent from a reading of the specifications and the accompanying drawings.

Figure 1 shows sectionally a conduit and cable support therein disposed to carry five cables in five separate cavities.

Figure 2 shows sectionally a conduit and cable support comparable to Figure 1 and wherein the said cavities are honey-combed in configuration.

Figure 3 shows sectionally a frustrum triangularly arrayed cavities for supporting cables.

Figure 4 shows sectionally a conduit and cable support comparable to Figure 3, and wherein the said cavities are honey-combed in configuration.

Figure 5 shows partially sectioned a conduit and internal extrusion support displaced therein, the area displacement disposed to receive filler material for maintaining the cavity and conduit in a fixed relation.

Figures 6 and 7 shows typically conduit support forms of four and six cavity carriers respectively.

Figure 8 shows a rectangular conduit divided into dual compartments, one for receiving cavity extrusions for the support of six cables, and the other for supplying other needs.

Figure 9 shows a cable carrying support having cable support cells of varying sizes and diameters.

Figure 10 shows a trapazoidal shaped support having cells of different diameters.

Figure 11 shows partially sectioned a support whose cable contact surfaces and outer wall surfaces are treatable with self-lubricant resins for abrasive protection.

Figure 12 shows a circular array of isolated cells individually connected by a series of singular, flexible, membranes holding the cluster as an individual cable entity.

Figure 13 shows another cluster of cells as per Figure 12 with commonly connected walls.

Figure 14 & 15 are rectangular arrays of isolated cells connected as per Figure 12 by membranes.

Figure 16 shows a circular array of interconnected cells.

Figure 17 shows individual carriers, each carrier having biased key ways for connection to the splicing sleeve of Figure 18.

Figure 18 shows a splicing sleeve for interconnected completed cells.

DESCRIPTION

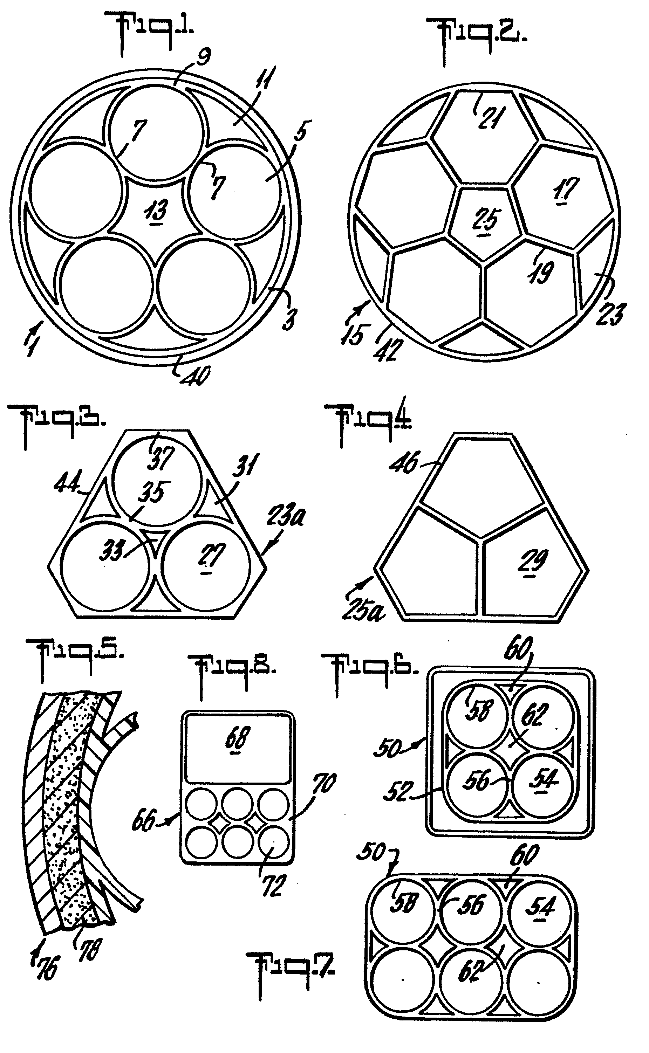

Now particularly describing the invention there is shown in Figure 1 a conduit 1 having an extruded cable carrier 3 with a series of circularly arrayed cavities or cells 5 each disposed to receive therein a utility carrying device such as a cable or other utility carrying mechanism. The cavities or cells can be used to carry gas, water and other fluids as well as cables. The cavities at their point of contact with each other 7 and with the outer shell 9 of the extrusion, form a single wall thickness thereby increasing the inside diameters of the cavities to handle larger cables. The cavities at their respective points of contact 7, 9, form a triangular like structural support to give greater strength to the extrusion 3 not otherwise available. A series of filler cavities 11, 13 between the cavities themselves and the outer shell are also for the purpose of rendering further structural support to the cavity as well as being capable of supporting additional functions such as wiring, fluids, gas and etc.

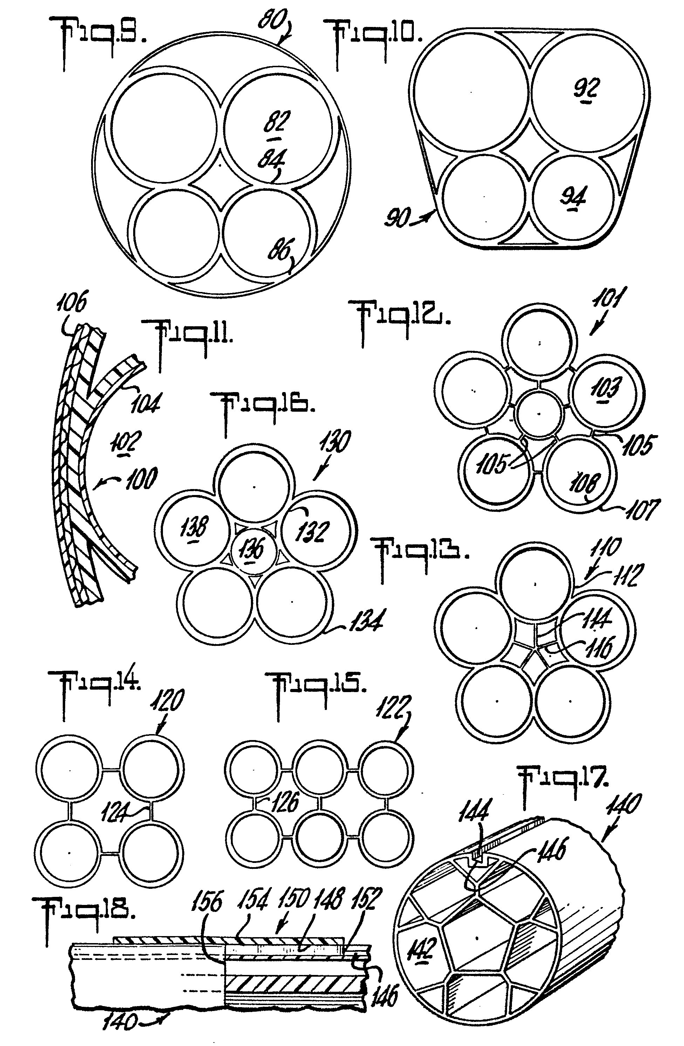

Figure 2 is a cable carrying extrusion 15, comparable to Figure 1 and wherein the cable carrying cavity 17 are honey-combed in shape to render additional structural strength to the extrusion. Here also the cavity points of contact with themselves 19 and with the outer shell 21 of the extrusion have a common thickness. Each of the cavities 17 arrayed together further define additional filler cavities 23, 25, as per Figure 1, which permits additional functions as well as structural strength.

Other configured extruded cavity forms are shown in Figures 3 & 4 and particular are truncated frustrum-like triangular extrusions 23a, 25a, one having circular cavities 27, and the other honey-combed 29. The triangular configurations of Figures 3 & 4 also show filler cavities 31, 33, as per Figures 1 & 2 for the purpose again of providing structural support as well as giving the required access to additional utility functions. The cavities 27 in Figure 3 each forms a single wall thickness at their tangential contact point 35 and with the outer wall points 37. This again permits maximum cavity size for the given wall thickness, and also gives structural support to the outer walls of the extrusion 23a.

The outer wall extremities 40, 42, 44, 46 of the extrusions 1, 15, 23 and 25 of Figures 1, 2, 3, & 4 respectively are extra heavy and so disposed relative to the inner portions of the extrusions as to render considerable stregnth and wear resistance circumferentially, thereby presenting a retaining wall or barrier to any other pressure caused by cave-ins, wear, in pull through and other catastrophic interruptions. Hence protection to the cables is also present to avoid disruptions and failures to the fuctionally carrying cables.

The extrusion as shown by the various figures is made of plastics and derivatives thereof, and is so constituted by its chemical make-up to be sufficiently malleable in both the longitudinal and transverse axis. This permits easy entrance into and access to and through the conduit to allow the extrusion to easily fill in the crevasses and cavities of the said conduit. The extrusion is formed so as to easily overcome any impediment or flaws along the conduit path which would ordinarily impair the free flow and entrance of cable within the conduit.

It may be appreciated that although the outside surface of the extrusion is malleable along the axis previously mentioned, the internal make-up of the extrusion is structured so as to maintain stiffness along the internal cable carrying cavities, thus protecting the cables regardless of the pressures exerted upon the outer surface of the extrusions.

There are shown additional configurations in Figures 6 & 7, each being rectangular in shape to accomodate four or six cavities. In particular Figure 6 shows a rectangular conduit 50 carrying an extruded carrier 52 having four cells 54, quadrature oriented, for the purpose of transporting functional cables and the like. Again the cells each have a common wall thickness at their contact point 56, 58 with each other and with the outer wall or covering of the extrusion carrier. Again the contact points 56, 58 provide structural

0160498

-6-

support to the extruded carrier 52. Also the filler areas 60, 62 between cells and walls provide additional capacity to transport functional means. Figure 7 is comparable to Figure 6, except that it provides additional cells to accomodate other functional carriers.

Figure 8 shows still another configured carrier in the form of dual compartments. In particular Figure 8 shows an extruded carrier 66 having dual compartments 68, 70, one of which is 70, provided with a cluster of cavities 72 and the other 68 a single channel or tunnel to permit it to be used for any singular functional purpose. In both Figures 6 & 7 there are the same contact points between cells themselves and between cell and walls.

In Figure 5 there is partially shown a section of an extrusion and conduit 76. In particular the space 78 defined by the distance between the outer covering of the extrusion and the inner wall of the conduit may have deposited therein a filler-like material which solidifies to maintain a solid relationship between conduit and extruded carrier to render additional strength and support to the carrier, and the functional cables disposed to be carried thereby. Also this tends to avoid the entry of moisture and dew formations within the conduit causing decay and other deteriorations.

The foregoing defines a particular embodiment, but changes can be made which does not restrict the invention to the embodiment as shown, but can be demonstrated to apply to other embodiments. Further the said extrusions permit the laying of conduit directly on or above the ground without the need for other protective condevices.

Now with respect to Figures 9 through 17, defining applicants additional embodiments, there is shown in Figure 9, a cable support 80 having a plurality of cells 82 of varying sizes and diameters, each cell at the point of abutment having a common wall thickness 84, 86, such as between cell and cell and between cell and outer wall. It may be appreciated that the walls defining the cavities and outer surfaces may be comprised of materials rendering said walls flexible and inalleable and capable of making the whole cable support 80 both flexible and capable of being coiled for purposes of transport and/or convenience in storaging.

Figure 10 shows another support configuration, in particular a trapazoidal shaped support 90 disposed to having its outer cells 92 of a greater diameter than the inner cells 94 so that coiling may be easily accomplished.

In Figure 11 there is shown partially sectioned a fragmented support 100 carrying the usual cells 102, both cells and support having their contact surfaces 104, 106 each treated, during the extrusion process, with self-lubricating resins disposed to ease friction between the wear surfaces of support cells, and cables being carried thereby. Such resins, upon contact, secrete lubricants making it easy for cable movements and causing less wear and tear on the contact and wearing surfaces. Here again the material bearing surfaces may not only be treated with self-lubricating resins, but also with materials having flex-additives to permit flexibility of such surfaces. Further, these materials not only will provide lubrication and flexibility to the wear surfaces, but also that such surfaces may be treated with fire-resistant materials such as fiberglass and asbestos. Also the materials may be treated with lead-galena type chemicals to make the supports both radioactive and electromagnetic wave proof. It presents a complete shield to these types of radiation.

Figure 12 shows another embodiment of the invention in that there is shown a circular array 101 of isolated cells 103 individually connected by a series of singular, flexible membranes 105 holding the array as an individual entity. Each of the individual cells 103 forming the array 101 is reinforced along the outer portions thereof 107, that part which will come in contact with the conduits for housing the cable carriers 101. The outer wall reinforcement can be accomplished by first polishing such surfaces during the extrusion process. This process is common in the plastics industry and requires no further detail here. Also each wear surface 108 of the inner cells 103 requires the addition of lubricating materials such as previously described which would become self-lubricating when contacted by incoming cables. The inner surface wall 108 can be sprayed by air-jets so that atomized silicones or oil will coat the said surfaces providing low friction to the incoming cables. Such materials may be imparted to the wear surfaces, be they inner or outer surfaces in the extrusion process by varying the temperature of the dye during the material feeding process.

In Figure 13 there is shown a similar array of cells 110 as per Figure 12, but with all cells abutting each other in a circular array along common borders 112, each held together by a spoke-like wheel 114 compressed of singular, flexible membranes 116 as per Figure 12. Here again as per Figure 11, the inner and outer walls have self-lubricating elements to assure frictionless action or something akin to it.

In Figures 12 & 13 the membranes 105, 116 are flexible, but still sufficiently strong to maintain the cells attached thereto in a fixed array. The membranes can be selectively cut or sliced in certain areas so that a particular cell may be manipulated for various purposes. Such cell movements make it convenient for the whole cable to fit into a particular conduit. There are an assortment of reasons for slicing the membranes to suit whatever purpose that is needed at the time.

Figures 14 & 15 are rectangular arrays of isolated cells 120, 122 connected together by flexible membranes 124, 126 as per Figures 12 & 13. These cells are merely presented to show the variety of cell arrays possible with the configurations as shown and demonstrated herein.

Figure 16 shows a circular array of cells 130 having adjoining cells abutting and becoming a common wall 132. The cell array 130 does not have an outer wall covering, and so each of the cell extremities 134 are strengthened by wall build up. This heavier build up gives greater strength to the cells along their outer extremities. The array 130 of Figure 16 contains a central cell 136 which abuts each of the cells 138 of the array 130, the abuttment forming a common wall between cells.

In Figures 17 & 18 these are shown ways to connect the carriers, or splicing them to assure a tight and leak-proof seal between connecting carriers. Figure 17 shows a cable-carrying carrier 140 having an array of cells 142 configured as desired. In particular the carrier 140 has a keying-groove 144, the bottom portion thereof 146 being biased for purposes of engaging a complimentary biased key 148 forming an integral part of a splicing or connecting sleeve assembly 50. In particular, Figure 18 shows a splicing sleeve 154 having a depending key member 156 so configured to engage the key-groove 144 to form a splicing fit. If the key and groove are not biased in the same direction a fit between sleeve and carrier is impossible. Although what is shown is a single key and groove assembly, it is possible to have a plurality of key and groove assemblies circumferentially oriented to better connect adjoining carriers. One of the reasons for a biased key and groove assembly is the opportunity for reducing error in the connection process of the carriers. Also such a connecting sleeve speeds up the connections between carriers. What is shown here is, but a single, simple way of connecting carriers with error margins reduced to a minimum. There are other ways for grooving carrier and sleeve to make
compatable splices to assure proper connections between
carriers.

0160498

## C L A I M S

1.      A carrier support adapted to be within a protective conduit for the purpose of supporting utility carriers along a path in a damage-prone environment said carrier support comprising, a) an elongated extruded malleable member within and along said conduit path dimensionally disposed along its outer surface to conform to the inner wall of said conduit and carried thereby, b) a plurality of extruded individual cavities within said extruded member whose paths are symetrically oriented about a co-axial line central to said extruded member and each disposed to maintain a common wall along contact points between individual cavities and between cavity and outer covering of said extruded member, and c) support barriers within said extrusion between cavities and outer wall disposed to maintain the cavity form along the conduit path regardless of the damage prone environment.

2.      A carrier support according to claim 1, in which the extruded member includes five cavities each having tangential contact along a common wall and contact with the outer wall to form three contact points to render stiffness and strength to the extruded member along its complete path to prevent the collapse thereof.

3.      A carrier support according to claim 2, in which the cavities are circularly shaped to permit a common wall thickness between cavities and between cavity and outer wall to render maximum capacity within the extrusion while still maintaining the required stiffness and strength.

4.      . A carrier support according to claim 2, in which the cavities are honey-comb shaped with common wall contact points to provide maximum size and strength.

5.      A carrier support according to claim 1, in which there is included between the cavities and wall, filler spaces, each disposed to provide additional strength as well as means for transmitting additional utility functions.

6.      A carrier support according to claim 1, in which the

U.S. 603092 etc.

extruded member is triangular frustrum shaped to accomodate a plurality of cavities, said configuration disposed to permit the extruded member to freely coil and wind to accommodate and freely negotiate conduit paths having impediments therein.

7.     A carrier support according to claim 6, in which triangular member includes three, five or more circularly configured cavities each having contact points along a common wall between the cavities and between cavity and the outer wall of the extruded member to provide optimum size and rigidity to the extruded member.

8.     A carrier support according to claim 6, in which the extruded member includes three honey-comb configured cavities, each having contact points along a common wall between cavities and between cavity and the outer wall of the extruded member to provide optimum size and rigidity to the extruded member.

9.     A carrier support according to claim 1, in which the extruded member includes a plurality of cavities rectangularly arrayed within said member, the cavities having contact points along common barrier walls and the outer walls of said extruded member.

10.     A protective conduit having therein an extruded malleable carrier support according to any one of the preceding claims, the inside surface of said conduit and the outside surface of said carrier support defining a space for receiving filler material disposed to solidify therein to cause the said conduit and carrier support to maintain a fixed spaced relationship to suitably protect the carrier support from the entry of contaminents within the conduit.

11.     A cable support system comprising extrudable cable support members each composed of cable carrying cells symmetrically arrayed about a coaxial line central to the said array, resilient means connecting said cells to maintain and support the cells in their arrayed configuration while providing resiliency to the cell array configurations, material means disposed about the said cells to provide reinforcement and lubrication along their wear and/or bearing surfaces, and splicing means for connecting the cable support members at their extremities to maintain continuity of the cable support system.

Fig.1.

Fig.2.

Fig.3.

Fig.4.

Fig.5.

Fig.8.

Fig.6.

Fig.7.

Fig.9.

80

82
84

86

Fig.10.

92

94

90

106

Fig.11.

104

102

100

Fig.16.

130

138

136

132

134

Fig.12.

101

103

105

105

108

107

Fig.13.

110

112

114

116

Fig.14.

120

124

Fig.15.

122

126

Fig.17.

144

140

146

142

Fig.18.

156  154  150  148  152

146

140